# EUROPEAN PATENT APPLICATION

(11) **EP 0 782 234 A2**
(43) Date of publication of application: **02.07.1997**
(21) Application number: 96402921.9
(22) Date of filing: 30.12.1996
(51) Int. Cl.: H02G 7/06

(54) **Suspension device for aerial cables**

(30) Priority: 28.12.1995 ES 9502542
(71) Applicant: ALCATEL ALSTHOM COMPAGNIE GENERALE D'ELECTRICITE, 75008 Paris (FR)
(72) Inventor: Saez de la Maza, Francisco José, 39007 Santander (Cantabria) (ES); Camara del Castillo, Susana, 39600 Muriedas (Cantabria) (ES)
(74) Representative: Lamoureux, Bernard

(57) **Abstract**

Suspension device for aerial cables (CA) hung from one of the cables (LD) of an existing electric power line, whereby the suspension device establishes a separation between the aerial cable (CA) to be laid and the cable (LD) of the electric power line already laid. This device consists of a single piece in the form of a clamp, the extremities of which are of different lengths and bent back on each other so as to overlap, and which holds both cables (CA,LD) on its inside.

Suspension device of special application for serial optical fibre communications cables, which are hung from a cable of an electric power line which has not ground wire.

## Description

### OBJECT OF THE INVENTION

This invention concerns a suspension device for aerial cables, and in particular optical fibre communications cables which are hung from one of the cables of an electric power line, already laid, and in such a way that the first is not subject to mechanical stress.

It is of special application in those electric power lines which have no ground wire and, consequently, the aerial communications cable has to be hung from one of the live cables of said electric power line.

### BACKGROUND OF THE INVENTION

Electric current flowing through a cable causes it to heat up, it being possible to reach temperatures of more than 50 °C. For this reason it is not advisable to have electric power lines and communications cables in close proximity because the materials in contact with the electric power line must be resistant to high temperatures, as well as to temperature-related ageing.

In order to lay two cables together, leaving a spacing between them, suspension devices are employed.

Such devices are known, for example from the European patent application EP 0044921 in which is shown in detail a suspension device for hanging an aerial cable from one of the cables of an electric power line.

This patent presents a suspension device for aerial cables that comprises several parts, some specifically for the cable of the electric power line and other specifically for the aerial cable; all of which means that the process of installing the suspension device and laying of the aerial cable alongside the electric power line is complicated and time-consuming.

The manufacturing costs of the suspension device are high since it is necessary to produce parts for specific application and not of general purpose and, in addition, their installation requires considerable time.

As a result, the technical problem to be solved is to obtain a suspension device that has parts for general purpose use, straight-forward to assemble, and easy to manufacture.

Likewise the installation process has to be simple, thereby facilitating the job of laying the aerial cable alongside the electric power line. The whole results in a reduction of manufacturing and installation costs and means therefore that the cost of laying the aerial cable is low.

### CHARACTERIZATION OF THE INVENTION

The object of the invention is the provision of a suspension device to hang an aerial optical fibre communications cable from a cable of an electric power line, consisting of a single piece that is easy to manufacture and simple to install.

The suspension device of the invention consists of one piece in the form of a clamp, the extremities of which are bent back each other so as to overlap.

Both cables are inserted into the suspension device by separating the two extremities by pressure, the extremities being of different lengths in order to facilitate this operation. The extremities are made to fit into each other so as to prevent accidental openings of the suspension device.

The suspension device is cheap since it is manufactured in a single piece and it is simple to mount as it only requires pressure to be applied to the longest end of the suspension device in order to insert the cables into it.

Moreover, laying of the aerial cable is done from the ground using the suspension device in the same manner as a garland and the attachment of it to the cables is also done from the ground.

For the foregoing reasons, the manufacture and installation of the suspension device is low in cost.

### DESCRIPTION OF THE INVENTION

A fuller explanation of the invention is given in the following description based on the figure attached in which:

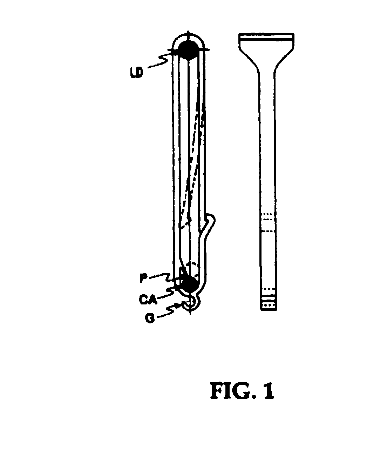

- figure 1 shows the elevation and cross-section of the suspension device for aerial cables according to the invention.

The suspension device of the invention, see figure 1, consists of a single piece in the form of a clamp, the extremities of which are bent back on each other and have the shape of a hook in such a manner that one extremity fits over the other. In this way accidental opening of the device is avoided.

The extremities of the suspension device are of different length in order to facilitate its opening and the insertion of cables. The longer extremity is the upper one.

In its lower part the device holds an aerial optical fibre communications cable CA and, in its upper part, a cable LD of an electric power line.

To insert both cables CA, LD into the device, pressure is applied to its longer extremity in such a way that the extremities are separated leaving an opening through which both cables CA, LD are introduced.

The suspension device incorporates a pulling element G, located at its lower end, which permits the aerial cable CA to be laid using the suspension device in the same manner as a garland. To do this, a rope has to be strung through said pulling element G and pulled on from the ground.

The rope incorporates a number of stops which serve to separate the suspension devices from each other and distribute them uniformly along the cable LD of the electric power line, spacing them at a predetermined distance one from another and thereby distributing the weight of the aerial communications cable CA among all the devices used for a given installation span.

Once the aerial cable CA has been put into place, the devices are fixed in position by pulling the aerial cable vertically downwards, so that the aerial cable CA fits into the bottom of the suspension device.

This cable does not move from this position because the projection P prevents this by acting to permit a vertical movement downwards but not upwards.

To prevent the device from cutting the cable LD of the electric power line through the combined effect of the weight of the aerial cable CD and the abrasive action produced by the rubbing of the devices moving transversally against the electric power line as a result of weather effects, the upper part of the suspension device is wider than its lower part.

Consequently the weight of the aerial cable CA is distributed over a greater surface of the cable LD of the electric power line and the abrasive effect is less per unit of contact surface area.

The suspension device is made from an insulating polyamide which is elastic and has ultraviolet protection to prevent its premature deterioration due to solar radiation, wind, rain, etc.

## Claims

1. **SUSPENSION DEVICE AERIAL CABLES (CA)** which is hung from one of the cables (LD) of an existing electric power line, such that the suspension device establishes a separation between the aerial cable (CA) to be laid and the already laid cable (LD) of the electric power line, **characterised** in that it is formed by a piece with the form of a clamp, the extremities of which are bent back on each other so as to overlap.

2. **SUSPENSION DEVICE** according to claim 1 **characterised** in that its extremities are of different lengths.

3. **SUSPENSION DEVICE** according to claim 1, **characterised** in that it comprises at least one projection (P) which holds the aerial cable (CA) against the lower inside part of the suspension device in which said aerial cable (CA) is housed.

4. **SUSPENSION DEVICE** according to claim 1, **characterised** in that the part of the suspension device that rests on the cable (LD) of the electric power line is broader than the part in which the aerial cable (CA) is housed.

5. **DEVICE FOR SUSPENSION** according to claim 1, **characterised** in that, in its lower part, it comprises a pulling element (G) which permits the aerial cable (CA) to be laid and leave a predetermined separation between the suspension devices that constitute an installation span.
